Europäisches Patentamt

European Patent Office

Office européen des brevets

(11) Veröffentlichungsnummer: **0 304 602**
**A2**

# (12) EUROPÄISCHE PATENTANMELDUNG

(21) Anmeldenummer: 88111259.3

(22) Anmeldetag: 13.07.88

(51) Int. Cl.⁴ **G02F 1/03 , G02F 1/29 , G02F 1/21**

(30) Priorität: 25.08.87 DE 3728347

(43) Veröffentlichungstag der Anmeldung:
01.03.89 Patentblatt 89/09

(84) Benannte Vertragsstaaten:
**DE FR GB NL**

(71) Anmelder: **Siemens Aktiengesellschaft Berlin und München**
**Wittelsbacherplatz 2**
**D-8000 München 2(DE)**

(72) Erfinder: **Auracher, Franz, Dr.**
**Eichenstrasse 26**
**D-8021 Baierbrunn(DE)**
Erfinder: **Noll, Bernd**
**Zillertalstrasse 69**
**D-8000 München 70(DE)**

(54) **Anordnung mit mindestens einem auf ein Substrat aus elektrooptischem Material integrierten optischen Wellenleiter und mindestens einer Elektrode.**

(57) Bestimmte elektrooptische Modulatoren für die optische Nachrichtentechnik weisen mindestens einen an einer Oberfläche (10) eines elektrooptischen Substrats (1) integrierten Wellenleiter (11, 12) und mindestens eine dem Wellenleiter zugeordnete Elektrode (13, 15; 14, 16) auf, die durch eine dielektrische Zwischenschicht (17, 18) vom Substrat (1) getrennt ist und an die eine Modulations- oder Schaltspannung anzulegen ist. Zur Festlegung des Arbeitspunktes des Modulators muß zusätzlich eine Gleichspannung an die Elektrode angelegt werden. Dabei hat es sich gezeigt, daß der Arbeitspunkt wegdriftet. Es soll gezeigt werden, wie der Arbeitspunkt ohne Dämpfung des Lichts im Wellenleiter stabilisiert werden kann, so daß der nicht mehr wegdriftet.

Dazu ist mindestens eine dem Wellenleiter (11, 12) zugeordnete weitere Elektrode (101, 103; 102, 104) zum Anlegen einer vorbestimmten Gleichspannung in einem Abstand vom zugeordneten Wellenleiter (11, 12) direkt auf der Oberfläche (10) des Substrats aufgebracht. Durch Wahl der vorbestimmten Gleichspannung und des Abstandes kann der Arbeitspunkt eingestellt werden, ohne daß der Wellenleiter bedämpft wird.

Anwendung bei der optischen Nachrichtentechnik

FIG 1

## Anordnung mit mindestens einem auf ein Substrat aus elektrooptischem Material integrierten optischen Wellenleiter und mindestens einer Elektrode

Die Erfindung betrifft eine Anordnung mit mindestens einem an einer Oberfläche eines Substrats aus elektrooptischem Material integrierten optischen Wellenleiter und mindestens einer dem Wellenleiter zugeordneten Elektrode nach dem Oberbegriff des Patentanspruchs 1.

Beispiele für Anordnungen der genannten Art sind elektrooptische Modulatoren und Schalter in Wellenleitertechnik, die für die Anwendung in der optischen Nachrichtentechnik entwickelt werden (siehe dazu IEEE J. Quantum Electron. QE-19 (1983), S. 1339-1341). Das bevorzugte elektrooptische Material des Substrats ist derzeit LiNbO₃, weil darin mit sehr einfachen Technologien dämpfungsarme optische Wellenleiter hergestellt werden können. Ein Beispiel für einen Schalter nach dem sog. Richtkopplerprinzip in LiNbO₃ ist in J. Opt. Commun. 5 (1984), S. 7-9 angegeben. Bei diesem Schalter sind an der Oberfläche des Substrats aus LiNbO₃ zwei optische Wellenleiter integriert, die in einer vorbestimmten Koppelstrecke in geringem Abstand nebeneinander verlaufen. In der Koppelstrecke ist über dem Wellenleiter ein aus zwei getrennten Elektroden zum Anlegen einer Schaltspannungbestehendes Elektrodenpaar über der Oberfläche des Substrats angeordnet und von dieser durch eine dielektrische Zwischenschicht getrennt. In der Koppelstrecke ist der geringe Abstand zwischen den beiden Wellenleitern so bemessen, daß in Abhängigkeit von der Schaltspannung zwischen den Wellenleitern eine Überkopplung von Licht auftritt.

Eine Elektrode zum Anlegen einer elektrischen Modulations- oder Schaltspannung muß in unmittelbarer Nähe des zugeordneten Wellenleiters liegen, damit die Hochfrequenz-Steuerleistung klein gehalten werden kann. Sie muß daher auf der elektrisch isolierenden Zwischenschicht angeordnet werden, die verhindert, daß das optische Feld durch diese Elektrode gedämpft wird. An die eine oder mehreren Elektroden zum Anlegen der Modulations- oder Schaltspannung muß im allgemeinen zur Einstellung des Arbeitspunktes der Anordnung eine Gleichspannung angelegt werden. Dabei zeigt sich, daß der Arbeitspunkt mit der Zeit wegdriftet. Ursache ist die geringe Leitfähigkeit der elektrisch isolierenden Zwischenschicht, die aber ein genau definiertes Verhältnis zur Leitfähigkeit des Substrats aus elektrooptischem Material haben muß. Die reproduzierbare Herstellung einer solchen isolierenden Zwischenschicht mit definierter Leitfähigkeit bereitet sehr große technologische Schwierigkeiten.

Der Arbeitspunkt könnte stabilisiert werden, wenn die Leitfähigkeit der Zwischenschicht wesentlich größer als die des Substrats gemacht würde. Dabei erhöhte sich aber auch die Dämpfung des Lichts in den Wellenleitern.

Aufgabe der Erfindung ist es, aufzuzeigen, wie bei einer Anordnung der eingangs genannten Art der Arbeitspunkt ohne Dämpfung des Lichts in einem Wellenleiter stabilisiert werden kann, so daß er mit der Zeit nicht wegdriftet.

Diese Aufgabe wird durch die im kennzeichnenden Teil des Patentanspruchs 1 angegebenen Merkmale gelöst.

Bei der erfindungsgemäßen Anordnung dient die dem Wellenleiter zugeordnete separate weitere Elektrode zum Anlegen der Gleichspannung, die zur Arbeitspunkteinstellung benötigt wird. Diese Elektrode ist in einem Abstand von den zugeordneten Wellenleitern ohne elektrisch isolierende Zwischenschicht direkt auf der Oberfläche des Substrats aufgebracht. Der Abstand dieser Elektrode von dem zugeordneten Wellenleiter und gegebenenfalls auch anderen Wellenleitern ist so groß zu wählen, daß sie diese Wellenleiter auch ohne elektrisch isolierende Zwischenschicht nicht bedämpfen. Zuleitungen zu weiteren Elektroden, welche die Wellenleiter kreuzen, müssen auf einer elektrisch isolierenden Zwischenschicht-Brücke über die Wellenleiter geführt werden. Eine Elektrode zum Anlegen einer hochfrequenten elekrischen Modulations- oder Schaltspannung müssen wie bei der bekannten Anordnung in unmittelbarer Nähe des zugeordneten Wellenleiters liegen, damit die hochfrequente Steuerleistung klein gehalten werden kann. Derartige Elektroden müssen daher wie bisher auf einer elektrisch isolierenden Schicht angeordnet werden, die jedoch wegen der fehlenden Gleichspannung hochohmig sein kann.

Bevorzugte Ausführungsformen der erfindungsgemäßen Anordnung gehen aus den Unteransprüchen 2 bis 10 hervor, wobei die Anordnungen nach den Ansprüchen 2 bis 6 Schalter oder Modulatoren nach dem Richtkopplerprinzip betreffen und die Anordnungen nach den Ansprüchen 7 bis 10 für Mach-Zehnder-Modulatoren geeignet sind.

Ausführungsbeispiele der Erfindung werden anhand der Figuren in der nun folgenden Beschreibung näher erläutert. Von den Figuren zeigen:

Figur 1 einen Modulator nach dem Richtkopplerprinzip mit in Längsrichtung der Wellenleiter hintereinander angeordneten Elektroden,

Figur 2 einen Modulator nach dem Richtkopplerprinzip mit senkrecht zur Längsrichtung der Wellenleiter hintereinander angeordneten Elektroden und

Figur 3 eine Ausführung eines Mach-Zehnder-Modulators.

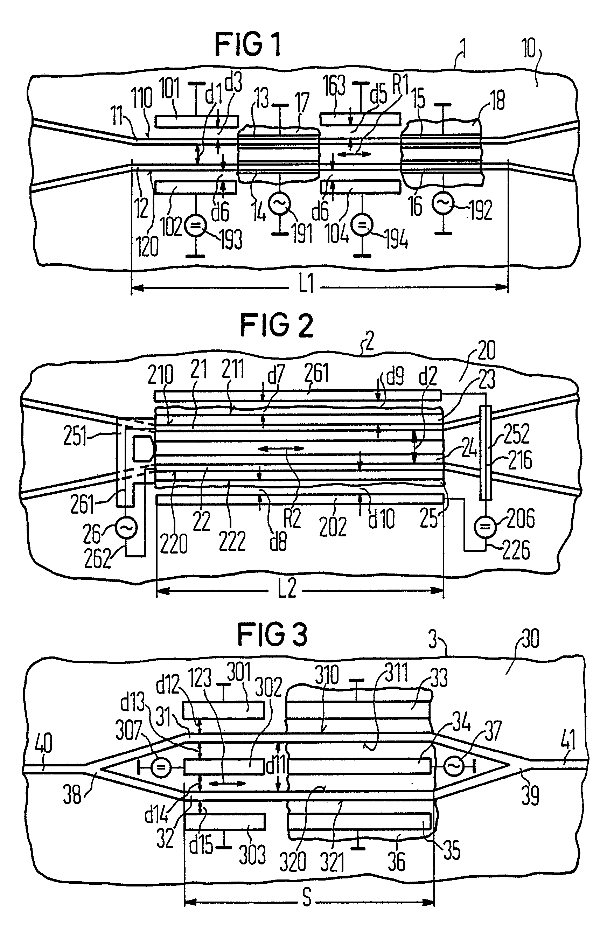

Bei den Ausführungsformen nach den Figuren 1 und 2 sind an der Oberfläche 10 bzw. 20 des beispielsweise aus LiNbO₃ bestehenden Substrats 1 bzw. 2 zwei optische Wellenleiter 11, 12 bzw. 21, 22, beispielsweise eindiffundierte Streifenwellenleiter, integriert, die in einer vorbestimmten Koppelstrecke L1 bzw. L2 in geringem Abstand d1 bzw. d2 nebeneinander verlaufen.

Bei der Ausführungsform nach Figur 1 sind in der Koppelstrecke L1 in Längsrichtung R1 der beiden Wellenleiter 11 und 12 nacheinander und im Abstand voneinander zwei Elektrodenpaare angeordnet, von denen eines aus den zwei getrennten Elektroden 13 und 14 und das andere aus den beiden getrennten Elektroden 15 und 16 besteht. Die Elektroden 13 und 15 sind dem Wellenleiter 11 und die Elektroden 14 und 16 dem Wellenleiter 12 zugeordnet. Jede Elektrode 13 bis 16 ist über dem zugeordneten Wellenleiter 11 bzw. 12 angeordnet und durch eine, beispielsweise aus SiO₂ bestehende dielektrische Zwischenschicht 17 oder 18 von der Oberfläche 10 des Substrats 1 getrennt.

An die beiden Elektroden 13 und 14 wird eine zeitlich variierbare Modulations- oder Schaltspannung angelegt, beispielsweise dadurch, daß eine der beiden Elektroden, beispielsweise die Elektrode 13, an ein bestimmtes Potential, beispielsweise an Masse, und die andere Elektrode 14 an eine Modulations-oder Schaltspannungsquelle 191 zur Erzeugung einer zeitlich variierbaren Modulations- oder Schaltspannung gegenüber dem bestimmten Potential angeschlossen wird. Entsprechend wird über die Elektroden 15 und 16 eine Schaltspannung angelegt, indem beispielsweise die Elektrode 15 an Masse und die Elektrode 16 an eine Modulations-oder Schaltspannungsquelle 192 zur Erzeugung einer zeitlich variierbaren Modulations-oder Schaltspannung gegenüber Masse angelegt wird. Die zeitlich variierbare Modulations- oder Schaltspannung kann auch so an die betreffenden Elektroden 13 und 14 bzw. 15 und 16 angelegt werden, daß zwischen diese Elektroden eine Modulations- oder Schaltspannungsquelle geschaltet wird, die diese Spannung erzeugt.

Außerdem sind in der Koppelstrecke L1 der Anordnung nach Figur 1 zwei von den Elektrodenpaaren 13, 14 und 15, 16 getrennte, weitere Elektrodenpaare angeordnet, von denen eines aus zwei weiteren Elektroden 101 und 102 zum Anlegen einer vorbestimmten Gleichspannung und das andere aus zwei weiteren Elektroden 103 und 104 zum Anlegen einer vorbestimmten Gleichspannung besteht. Jedes weitere Elektrodenpaar 101, 102 und 103, 104 ist in Längsrichtung R1 der Wellenleiter 11 und 12 vor oder hinter einem der Elektrodenpaare 13, 14 und 15, 16 angeordnet. Die weiteren Elektroden 101 und 102 bzw. 103 und 104 jedes weiteren Elektrodenpaares sind gegenüber äußeren Längsseiten 110, 120 der Wellenleiter 11, 12 und jeweils mit Abstand d3 und d5 bzw. d4 und d6 zum zugeordneten Wellenleiter 11 bzw. 12 ohne elektrisch isolierende Zwischenschicht direkt auf der Oberfläche 10 des Substrats aufgebracht. Das Anlegen der Gleichspannung an die weiteren Elektroden 101 und 102 bzw. 103 und 104 jedes weiteren Elektrodenpaares 101, 102 bzw. 103, 104 kann beispielsweise so erfolgen, daß eine weitere Elektrode jedes weiteren Elektrodenpaares, beispielsweise die weitere Elektrode 101 bzw. 103, an Masse und die andere weitere Elektrode 102 bzw. 104 jedes Paares an eine Gleichspannungsquelle 193 bzw. 194 angeschlossen wird, welche die für die Einstellung des Arbeitspunktes erforderliche Gleichspannung liefert. Die Gleichspannung kann auch so angelegt werden, daß zwischen die betreffenden Elektroden 101 und 102 bzw. 103 und 104 eine Gleichspannungsquelle geschaltet wird, welche diese Differenz erzeugt. Die Abstände d3 bis d6, die alle gleich sein können, sind so groß zu bemessen, daß die betreffenden weiteren Elektroden 101 bis 104 die Wellenleiter 11 und 12 nicht bedämpfen.

Bei der Ausführungsform nach Figur 2 ist in der Koppelstrecke L2 nur ein Elektrodenpaar aus zwei getrennten Elektroden 23 und 24 vorgesehen. Die Elektrode 23 ist dem Wellenleiter 21 und die Elektrode 24 dem Wellenleiter 22 zugeordnet. Jede Elektrode 23 bzw. 24 ist über dem zugeordneten Wellenleiter 21 bzw. 22 angeordnet und durch eine beispielsweise aus SiO₂ bestehende dielektrische Zwischenschicht 25 von der Oberfläche 20 des Substrats 2 getrennt.

An die beiden Elektroden 23 und 24 wird eine zeitlich variierbare Modulations- oder Schaltspannung angelegt, beispielsweise durch Zwischenschaltung einer Modulations- bzw. Schaltspannungsquelle 26 zwischen die beiden Elektroden 23 und 24, die eine zeitlich variierbare Modulations-oder Schaltspannung erzeugt. Von den Quelle 26 zu den Elektroden 23 und 24 führende elektrische Zuleitungen 261 bzw. 262 sind, soweit sie einen Wellenleiter 21 und/oder 22 überqueren, auf einer beispielsweise aus SiO₂ bestehenden elektrischen Zwischenschicht-Brücke 251 über diesen Wellenleiter 21 und/oder 22 geführt. Die zeitlich variierbare Modulations- oder Schaltspannung kann auch hier so erzeugt werden, daß eine der beiden Elektroden 23 und 24 auf ein bestimmtes Potential, beispielsweise an Masse, gelegt und die andere Elektrode an eine Modulations- oder Schaltspannungsquelle angeschlossen wird, welche eine zeitlich variierbare Modulations- oder Schaltspannung gegenüber diesem Potential erzeugt.

Die Elektroden 23 und 24 erstrecken sich in Längsrichtung R2 der Wellenleiter 21 und 22 über die ganze Koppelstrecke L2.

Zwei getrennte weitere Elektroden 201 und 202 eines weiteren Elektrodenpaares sind gegenüber äußeren Seiten 211 bzw. 222 des einen Elektrodenpaares 23, 24 und mit Abstand d7 bzw. d8 von diesem Paar angeordnet. Diese weiteren Elektroden 201 und 202 sind zudem gegenüber äußeren Längsseiten 210 bzw. 220 der Wellenleiter 21 bzw. 22 und mit Abstand d9 bzw. d10 von diesen Wellenleitern 21, 22 angeordnet. Die Abstände d9 und d10 können wie die Abstände d7 und d8 zueinander gleich sein.

An die beiden äußeren weiteren Elektroden 201 und 202 wird eine Gleichspannung angelegt, beispielsweise durch Zwischenschaltung einer Gleichspannungsquelle 206, die eine Gleichspannung erzeugt. Von dieser Quelle 206 zu den äußeren weiteren Elektroden 201 und 202 führende Zuleitungen 216 bzw. 226 sind, soweit sie einen Wellenleiter 201 und/oder 202 überqueren, auf einer beispielsweise aus SiO$_2$ bestehenden dielektrischen Zwischenschicht-Brücke 252 über diesen Wellenleiter 201 und/oder 202 geführt. Die Gleichspannung kann auch so angelegt werden, daß eine der beiden weiteren Elektroden 201 und 202 auf ein bestimmtes Potential, beispielsweise Masse, gelegt und die andere weitere Elektrode an eine Gleichspannungsquelle angeschlossen wird, welche eine Gleichspannung gegenüber dem bestimmten Potential erzeugt.

Die weiteren Elektroden 201 und 202 können sich wie die einen Elektroden 23 und 24 in Längsrichtung R2 der Wellenleiter 21 und 22 über die ganze Koppelstrecke L2 erstrecken.

Bei den Anordnungen nach Figur 1 und 2 sind der geringe Abstand d1 bzw. d2 der beiden Wellenleiter 11 und 12 bzw. 23 und 24 in der Koppelstrecke L1 bzw. L2 und die an die weiteren Elektroden 101, 102 und 103, 104 bzw. 201 und 202 zur Festlegung des Arbeitspunktes der betreffenden Anordnung anzulegende Gleichspannungsdifferenz oder -differenzen so zu wählen, daß in Abhängigkeit von der an die einen Elektroden 13, 14 und 15, 16 bzw. 23 und 24 angelegten Modulations- oder Schaltspannungsdifferenz eine Überkopplung von wellenleitergeführtem Licht zwischen den beiden Wellenleitern 11 und 12 bzw. 21 und 22 auftritt. Bei Verwendung einer solchen Anordnung als Schalter ist sie so zu dimensionieren, daß beide Schaltzustände mit symmetrischer Ansteuerung der Modulationsspannung erreicht werden.

Die Anordnung nach Figur 3 ist eine Ausführungsform eines Mach-Zehnder-Modulators. Bei dieser Anordnung verlaufen an der Oberfläche 30 des beispielsweise aus LiNbO$_3$ bestehenden Substrats 3 in einer bestimmten Strecke S zwei optische Wellenleiter 31 und 32, beispielsweise eindiffundierte Streifenwellenleiter, in einem Abstand d11 nebeneinander. In der bestimmten Strecke S sind zu beiden Längsseiten 310 und 311 bzw. 320 und 321 jedes Wellenleiters 31 bzw. 32 zwei zugeordnete Elektroden 33 und 34 bzw. 34 und 35 zum Anlegen je einer zeitlich variierbaren Modulations- oder Schaltspannung angeordnet. Beispielsweise ist dem Wellenleiter 31 das aus den Elektroden 33 und 34 bestehende Elektrodenpaar 33, 34 und dem Wellenleiter 32 das aus den Elektroden 34 und 35 bestehende Elektrodenpaar 34, 35 zugeordnet. Dabei können speziell die zwischen den beiden Wellenleitern 31 und 32 angeordneten Elektroden 34 der beiden Elektrodenpaare 33, 34 und 34, 35 zu einer einzigen Elektrode zusammengefaßt sein, die den beiden Wellenleitern 31 und 32 gemeinsam zugeordnet ist, so wie es in der Figur 3 dargestellt ist.

In jedem Fall sind beide Elektrodenpaare 33, 34 und 34, 35 durch eine dielektrische Zwischenschicht 36 von der Oberfläche 30 des Substrats 3 getrennt anzuordnen.

Jedes dieser Elektrodenpaare 33, 34 bzw. 34, 35 dient zum Anlegen einer zeitlich variierbaren Modulations- oder Schaltspannungsdifferenz. Die an die verschiedenen Elektrodenpaare anzulegenden, zeitlich variierbaren Modulations- oder Schaltspannungen können verschieden voneinander sein, so daß zwischen den Elektroden des einem Wellenleiter zugeordneten Paares und den Elektroden des dem anderen Wellenleiter zugeordneten Paares verschiedene elektrische Felder im elektrooptischen Material des Substrats und der Wellenleiter erzeugbar sind. So kann beispielsweise zwischen den Elektroden 33 und 34 des dem einen Wellenleiter 31 zugeordneten Elektrodenpaares 33, 34 eine in bestimmter Weise gepolte Spannung angelegt werden, die ein elektrisches Feld im Substrat 3 und dem zugeordneten Wellenleiter 31 erzeugt, und zwischen den Elektroden 34 und 35 des anderen Elektrodenpaares 34, 35 eine entgegengesetzt gepolte Spannung angelegt werden, die ein zum genannten elektrischen Feld entgegengesetzt gerichtetes elektrisches Feld im Substrat und dem zugeordneten anderen Wellenleiter 32 erzeugt.

Bei der speziellen Anordnung nach Figur 3 wird letzteres beispielsweise dadurch erzielt, daß die beiden außerhalb der beiden Wellenleiter 31 und 32 angeordneten Elektroden 33 und 35 beider Elektrodenpaare 33, 34 und 34, 35 an ein bestimmtes Potential, beispielsweise an Masse, angelegt werden und die zwischen den beiden Wellenleitern 31 und 32 angeordnete Elektrode 34 an eine Modulations- oder Schaltspannungsquelle 37 angeschlossen sind, die eine zeitlich variierbare Modulations- oder Schaltspannung gegenüber dem bestimmten Potential erzeugt.

Eine an ein Elektrodenpaar 33, 34 bzw. 34, 35 anzulegende Modulations- oder Schaltspannung kann auch bei dieser Anordnung durch Zwischenschalten einer Modulations- oder Schaltspannugsquelle zwischen die Elektroden 33 und 34 bzw. 34 und 35 des betreffenden Elektrodenpaares 33, 34 bzw. 34, 35 angelegt werden, welche diese Differenz erzeugt.

Außerdem sind in der bestimmten Strecke S zu beiden Längsseiten 310 und 311 bzw. 320 bzw. 321 jedes Wellenleiters 31 bzw. 32 zwei zugeordnete weitere Elektroden 301 und 302 bzw. 302 und 303 zum Anlegen jeweils einer Gleichspannung ohne elektrisch isolierende Zwischenschicht auf der Oberfläche 30 des Substrats 3 angeordnet.

Beispielsweise ist im Wellenleiter 31 das aus den Elektroden 301 und 302 bestehende weitere Elektrodenpaar 302, 303 und dem Wellenleiter 32 das aus den Elektroden 302 und 303 bestehende Elektrodenpaar 302, 303 zugeordnet. Dabei können speziell auch hier zwischen den beiden Wellenleitern 31 und 32 angeordneten Elektroden 302 der beiden weiteren Elektrodenpaare 301, 302 und 302, 303 zu einer einzigen Elektrode 302 zusammengefaßt sein, die beiden Wellenleiter 31 und 32 gemeinsam zugeordnet ist, so wie es in Figur 3 dargestellt ist.

Der Abstand d12 der weiteren Elektrode 301 vom zugeordneten Wellenleiter 31, die Abstände d13 und d14 der einen oder zwei weiteren Elektroden 302 von den beiden zugeordneten Wellenleitern 31 und 32 und der Abstand d15 der weiteren Elektrode 203 vom zugeordneten Wellenleiter 32 sind jeweils so groß zu wählen, daß keine der weiteren Elektroden 301, 302 und 303 die beiden Wellenleiter 31 und 32 bedämpft. Der Abstand d11 zwischen den beiden Wellenleitern 31 und 32 in der Strecke S ist so groß zu wählen, daß sie sich in dieser Strecke S nicht gegenseitig beeinflussen.

Jedes dieser weiteren Elektrodenpaare 301, 302 bzw. 302, 303 dient zum Anlegen je einer Gleichspannung, durch die der Arbeitspunkt einer solchen Anordnung festlegbar ist.

Die an ein weiteres Elektrodenpaar 301, 302 bzw. 302, 303 anzulegende Gleichspannung kann beispielsweise so erzeugt werden, daß eine Elektrode des Paares, beispielsweise die außerhalb der beiden Wellenleiter 31 und 32 angeordnete Elektrode 301 bzw. 303 auf ein bestimmtes Potential, beispielsweise Masse, gelegt und die zwischen den beiden Wellenleitern 31 und 32 angeordnete andere Elektrode 302 des Paares an eine Gleichspannungsquelle 307 angeschlossen wird, welche eine Gleichspannung gegenüber dem bestimmten Potential erzeugt. Die an ein Elektrodenpaar 301, 302 bzw. 302, 303 anzulegende Gleichspannung kann auch hier so erzeugt werden, daß zwischen die Elektroden 301 und 302 bzw. 302 und 303 dieses Paares eine Gleichspannungsquelle geschaltet wird, welche diese Gleichspannung erzeugt.

Ein weiteres Elektrodenpaar 301, 302 und/oder 302, 303 ist vorzugsweise in Längsrichtung R3 der beiden Wellenleiter 31 und 32 vor oder hinter einem Elektrodenpaar 33, 34 und/oder 34, 35 angeordnet, insbesondere so, daß alle weiteren Elektroden 301, 302 und 303 der weiteren Elektrodenpaare 301, 302 und 302, 303 gemeinsam vor oder hinter den Elektroden 33, 34 und 35 der einen Elektrodenpaare 33, 34 und 34, 35 angeordnet sind.

Zur Vervollständigung des Mach-Zehnder-Modulators nach Figur 3 sind die beiden Wellenleiter 31 und 32 auf jeder Seite der Strecke S durch je eine Wellenleitergabel 38 bzw. 39 mit je einem weiteren Wellenleiter 40 bzw. 41 verbunden. Die Wellenleitergabeln 38 und 39 und die weiteren Wellenleiter 40 und 41 sind zweckmäßigerweise an der Oberfläche 30 des Substrats 3 integriert und von der gleichen Art wie die beiden Wellenleiter 31 und 32.

## Ansprüche

1. Anordnung mit mindestens einem an einer Oberfläche (10, 20, 30) eines Substrats (1, 2, 3) aus elektrooptischem Material integrierten optischen Wellenleitern (11, 12; 21, 22; 31, 32) und mindestens einer dem Wellenleiter zugeordneten Elektrode (13, 15, 14, 16; 23, 24; 33, 34, 35), die über der Oberfläche (10, 20, 30) des Substrats (1, 2, 3) angeordnet und von dieser durch eine elektrisch isolierende Zwischenschicht (17, 18; 25, 36) getrennt ist und die zum Modulieren oder Schalten von im zugeordneten Wellenleiter geführtem Licht mit Hilfe einer an die Elektrode (13, 15, 14, 16; 23, 24; 33, 34, 35) anzulegenden elektrischen Modulations- oder Schaltspannung dient, **dadurch gekennzeichnet,** daß zumindest eine dem Wellenleiter zugeordnete separate weitere Elektrode (101, 103; 102, 104; 201, 202; 301, 302, 303) zum Anlegen einer vorbestimmten Gleichspannung in einem Abstand (d3, d4, d5, d6; d9, d10; d12, d13, d14, d15) von dem zugeordneten Wellenleiter (11, 12; 21, 22; 31, 32) direkt auf der Oberfläche (10, 20, 30) des Substrats (1, 2, 3) aufgebracht ist.

2. Anordnung nach Anspruch 1, **dadurch gekennzeichnet,** daß an der Oberfläche (10; 20) des Substrats (1; 2) zwei optische Wellenleiter (11, 12; 21, 22) integriert sind, die in einer vorbestimmten Koppelstrecke (L1; L2) in geringem Abstand (d1; d2) nebeneinander verlaufen, daß in der Koppelstrecke (L1; L2) über den Wellenleitern (11, 12; 21, 22) zumindest ein aus zwei getrennten Elektroden (13, 14; 15, 16; 23, 24) zum Anlegen einer Modulations- oder Schaltspannung bestehendes Elektrodenpaar über der Oberfläche (10; 20) des Substrats (1; 2) angeordnet und von dieser durch eine dielektrische Zwischenschicht 17, 18; 25) getrennt ist, und daß in der Koppelstrecke (L1; L2) zumindest ein von dem einen Elektrodenpaar getrenntes und aus zwei neben den Wellenleitern (11, 12; 21, 22) direkt auf das Substrat (1; 2) aufgebrachten weiteren Elektroden (101, 102; 103, 104; 201, 202) zum Anlegen einer vorbestimmten Gleichspannung bestehendes weiteres Elektrodenpaar angeordnet ist, wobei in der Koppelstrecke (L1; L2) der geringe Abstand (d1; d2) zwischen den beiden Wellenleitern und die Gleichspannungs so gewählt sind, daß in Abhängigkeit von der Modulations- oder Schaltspannung zwischen den Wellenleitern (11, 12; 21, 22) eine Überkopplung von Licht auftritt.

3. Anordnung nach Anspruch 2, **dadurch gekennzeichnet,** daß das Elektrodenpaar (13, 14; 15, 16) und das weitere Elektrodenpaar (101, 102; 103, 104) in Längsrichtung (R1, R2) der beiden Wellenleiter (11, 12; 21, 22) nacheinander angeordnet sind.

4. Anordnung nach Anspruch 3, **dadurch gekennzeichnet,** daß in der Koppelstrecke (L1) mindestens zwei Elektrodenpaare (13, 14; 15, 16) und entsprechend viele weitere Elektrodenpaare (101, 102; 103, 104) in Längsrichtung (R1) der Wellenleiter (11, 12) abwechselnd hintereinander angeordnet sind.

5. Anordnung nach einem der Ansprüche 2 bis 4, **dadurch gekennzeichnet ,** daß die weiteren Elektroden (101, 102; 103, 104; 201, 202) eines weiteren Elektrodenpaares gegenüber äußeren Längsseiten (110, 120; 210, 220) der Wellenleiter (11, 12; 21, 22) angeordnet sind.

6. Anordnung nach Anspruch 5, **dadurch gekennzeichnet,** daß die weiteren Elektroden (201, 202) eines weiteren Elektrodenpaares gegenüber äußeren Seiten (211, 222) eines Elektrodenpaares (201, 202) angeordnet sind.

7. Anordnung nach Anspruch 1, **dadurch gekennzeichnet,** daß an der Oberfläche (30) des Substrats (3) zwei optische Wellenleiter (31, 32) integriert sind, die in einer bestimmten Strecke (S) in einem Abstand (d11) nebeneinander verlaufen, daß in der bestimmten Strecke (S) zu beiden Längsseiten (310, 311; 320, 321) jedes Wellenleiters (31, 32) zwei zugeordnete Elektroden (33, 34; 34, 35) zum Anlegen einer Modulations- oder Schaltspannung angeordnet sind, die durch eine dielektrische Zwischenschicht (35) von der Oberfläche (30) des Substrats (3) getrennt sind, und daß zu beiden Längsseiten (310, 311; 320, 321) jedes Wellenleiters (31; 32) zwei weitere Elektroden (301, 302; 302; 303) zum Anlegen einer vorbestimmten Gleichspannung angeordnet sind, die direkt auf die Oberfläche (30) des Substrats (3) aufgebracht sind.

8. Anordnung nach Anspruch 7, **dadurch gekennzeichnet,** daß die einen Elektroden (33, 34, 35) und die weiteren Elektroden (301, 302, 303) in Längsrichtung (R3) der Wellenleiter (31, 32) nacheinander angeordnet sind.

9. Anordnung nach Anspruch 7 oder 8, **dadurch gekennzeichnet,** daß eine zwischen den beiden Wellenleitern (31, 32) angeordnete Elektrode (34) beiden Wellenleitern (31, 32) gemeinsam zugeordnet ist.

10. Anordnung nach Anspruch 9, **dadurch gekennzeichnet,** daß eine zwischen den beiden Wellenleitern (31, 32) angeordnete weitere Elektrode (302) beiden Wellenleitern (31, 32) zugeordnet ist.

EP 0 304 602 A2

# FIG 1

# FIG 2

# FIG 3